Europäisches Patentamt

European Patent Office

Office européen des brevets

(11) Publication number: **0 206 104**
A2

# (12) EUROPEAN PATENT APPLICATION

(21) Application number: **86107920.0**

(22) Date of filing: **10.06.86**

(51) Int. Cl.⁴: **H 02 M 1/08, H 02 M 7/538**

(30) Priority: **18.06.85 US 746054**

(43) Date of publication of application: **30.12.86**
Bulletin 86/52

(84) Designated Contracting States: **DE FR GB NL**

(71) Applicant: **GENERAL ELECTRIC COMPANY, 1 River Road, Schenectady New York 12305 (US)**

(72) Inventor: **Reichard, Jeffrey Alan, W64 W12885 Miii Road, Menomonee Falls Wisconsin 53051 (US)**

(74) Representative: **Catherine, Alain, General Electric - Deutschland Munich Patent Operations Frauenstrasse 32, D-8000 München 5 (DE)**

(54) **FET gate driver circuit.**

(57) A half-bridge inverter circuit having first and second power FET's is provided with a high speed drive circuit for controlling each of the FET's with a single pulse signal. The drive circuit includes a pulse transformer having an input resistor selected to be of such a value as to limit the current through the primary winding of the pulse transformer. The pulse transformer has first and second secondary windings each connected to drive respective ones of the FET's in the half-bridge inverter. The circuit relies upon the Miller capacitance in the FET's to assure that a conducting FET is fully non-conducting before a second FET can be gated into induction. The Miller capacitance effect is reflected from the secondary of the pulse transformer into the primary transformer where the selected input resistor is connected. The Miller capacitance in the FET is sufficient to prevent coupling of the drive signal to the second FET until the first FET is fully turned off thus preventing.

# FET GATE DRIVER CIRCUIT

## BACKGROUND OF THE INVENTION

The present invention relates to transistorized inverter circuits and, more particularly, to an inverter circuit employing power field effect transistors.

Many products require inversion from direct current (DC) power to alternating current (AC) power and one form of circuit available for such conversion is an inverter which uses semi-conductor devices operating as switches. One type of switching device for use in such inverter circuits is the power field effect transistor or FET. The power FET is a semi-conductor device which behaves as a variable resistor between two terminals (a source and a drain) and is controlled by a voltage signal applied to a third terminal (gate). The gate is isolated from the two power terminals by a dialectric film or oxide which causes an inherent capacitor to be formed. The resistance between the source and drain terminals is varied by application of an electric field established by a voltage applied to the gate terminal of the FET. The FET is particularly useful in inverter circuits since it acts as a very high speed switch. It also has extremely high input impedance since it is basically a voltage responsive rather than current responsive device.

When using FET's in inverter circuits, it is desirable to have a time period during which both FET's are in a non-conducting state in order to assure that a first of the FET'S is gated out of conduction prior to a second of the FET'S being gated into conduction. The purpose of avoiding the simultaneous conduction is to

-2-

avoid failure of the inverter due to a shoot-through condition when both FET'S are conducting, i.e., short circuiting of the power supply may occur when both FET's conduct simultaneously. In order to achieve this desirable result, special integrated circuits have been developed using FET's which can be connected in inverter configurations. However, different FET's have been found to have different switching characteristics and integrated circuits designed for operation with one particular FET may not provide adequate dead time when a different FET is installed. One prior art solution to this problem has been to establish a dead time as a percentage of conduction time such that for any FET operating at a high frequency, cut off will occur before a second FET is gated on. However, such a practice results in excessive dead time when the inverter is operated at low frequencies.

It is an object of the present invention to provide a high speed drive circuit for controlling operation of at least a pair of FET's connected in an inverter configuration using a single pulse source without incurring a shoot-through problem.

SUMMARY OF THE INVENTION

The present invention comprises in one form an inverter including at least first and second FET's connected in a push-pull relation such that a source electrode of each FET is connected in common to one terminal of a DC power supply and a drain electrode of each FET is connected to a corresponding end terminal of a primary winding of a center tapped output transformer. The center tapped terminal of the primary winding is connected to a second terminal of the DC power supply. Each of the FET's is driven by a pulse transformer having a single primary winding and first and second secondary windings. One terminal of each of the secondary windings is connected to a corresponding gate electrode of one of the first and second FET's. A second terminal of each of the secondary windings is connected to a common reference terminal. One terminal of the primary winding of the pulse transformer is also connected to the common reference terminal while a second terminal of the primary winding is connected through a non-inductive resistor to an input terminal for receiving a switching command signal from a pulse source. The command signal is in the form of a square wave which varies between a first high state for gating one of the FET's into conduction and a second low state for gating a second of the FET's into conduction.

When a command signal having a first high state is applied to the input terminal, current is forced to flow between the primary winding of the input pulse transformer and induces a corresponding current in each of the secondary windings of the transformer. The secondary current establishes a voltage polarity on the gate electrode of one of the FET's such that it is brought into conduction as soon as its interelectrode capacitance is charged. The first FET thereafter begins conducting and allows current to flow through it from the power supply thereby exciting the primary winding of the output transformer. When the input command signal switches to a second lower state, the current through the primary winding attempts to reverse while at the same time driving the current in the secondary windings in a reverse direction. However, the voltage at the gate of the first FET which is in conduction cannot decay until the interelectrode capacitance is discharged and therefore the voltage on the first secondary winding is held at the high state. Accordingly, the voltage on the second secondary winding is also maintained at a high state until the first FET ceases conduction. The second FET can therefore not enter into conduction until the first FET has turned off. Thus, the problem of shoot-through is avoided. Since the decay rate of the interelectrode capacitance in the FET is a function of the impedance reflected into the secondary winding of the input pulse transformer, and since such reflected impedance is a function of the impedance at the primary winding of the pulse transformer, the value of the resistor in series with the switching command signal is chosen to assure a rapid turn off but of sufficient value to prevent the transformer from being driven so hard that the secondary winding connected to the second FET overpowers the current in the first winding, i.e., that the secondary windings become independent.

BRIEF DESCRIPTION OF THE DRAWING

For better understanding of the present invention, reference may be had to the accompanying detailed description taken in conjunction with the accompanying drawing in which:

Figure 1 is a schematic diagram of an inverter circuit in accordance with the present invention; and

Figure 2 is a sequence of wave forms illustrating the operation of the inverter circuit of Figure 1.

DETAILED DESCRIPTION

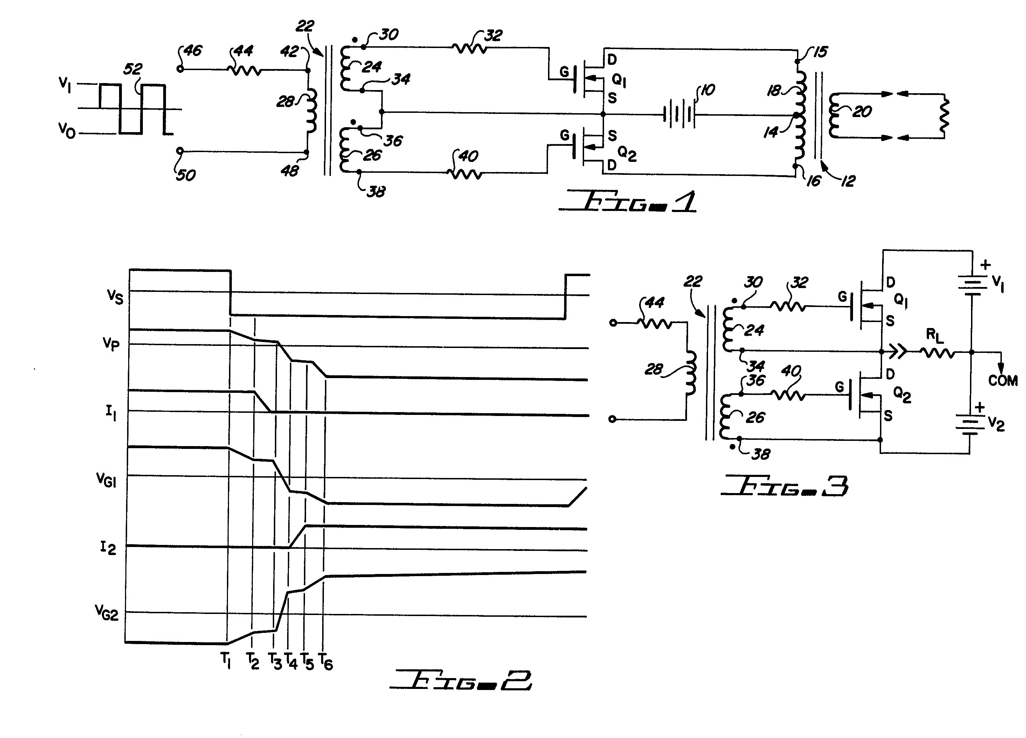

Referring now to Figure 1, there is shown a half-bridge inverter for driving a load, the inverter including first and second N channel enhancement type power field effect transistors (FET's) Q1 and Q2 respectively. Each of the power FET's Q1 and Q2 has a gate electrode G, a source electrode S and a drain electrode D. As can be seen, the power FET's Q1 and Q2 are connected in a push-pull relation such that the source electrode S of the power FET Q1 and the source electrode S of the power FET Q2 are connected in common to a negative terminal of a direct current (DC) power supply 10. The drain electrode D of the FET Q1 is connected to one end 15 of a primary winding of a center tapped output transformer 12. The center tapped terminal 14 of the transformer 12 is connected to a positive terminal of the DC power supply 10. A second end 16 of the primary winding 18 is connected to the drain terminal D of the FET Q2. The transformer 12 and its associated winding 20 across which is coupled a resistance $R_L$ constitute a load for the inverter circuit arrangement.

In accordance with the present invention, the FET's Q1 and Q2 are driven from a pulse transformer 22. The pulse transformer 22 includes first and second secondary windings 24 and 26 and a primary winding 28. A first end 30 of secondary winding 24 is connected through a resistor 32 to the gate electrode G of FET Q1. A second end terminal 34 of winding 24 is connected to the junction of the source electrodes S of the FET's Q1 and Q2. A first end terminal 36 of winding 26 is also connected to the junction of the source electrodes S. A second end terminal 38 of winding 26 is connected through a resistor 40 to the gate electrode G of the FET Q2. A first end 42 of the primary winding 28 is connected through a resistor 44 to an input terminal 46. A second end 48 of the winding 28 is connected to a second input terminal 50. A square wave pulse signal such as that illustrated at 52 can be applied between the terminals 46 and 50 to drive the FET's Q1 and Q2 into alternate states of conduction.

In describing the operation of the inverter circuit of Figure 1, reference will be made to the timing diagrams shown in Figure 2. The $V_S$ signal is representative of the square wave drive signal 52 applied to the inverter input terminals 46 and 50. For the purposes of discussion, it will be assumed that the inverter circuit has been in operation and that prior to the time T1 the FET Q1 is in conduction and FET Q2 is non-conducting. At time T1, the $V_S$ signal goes from a first high state to the second low state. The effect of this change is to attempt to drive current in a reverse direction through the primary winding 28 of transformer 22. The voltage $V_p$ is representative of the voltage appearing across the primary winding 28. As can be seen, this voltage begins to drop as soon as the $V_S$ signal changes state. At the same time, the voltage applied to the gate electrode of FET Q1 also begins to drop. However, this voltage does not drop enough to effect the drain to source current $I_1$ until the time T2. During the period from T1 to T2, the interelectrode capacitance or gate to source capacitance of the FET begins to discharge. The current generated by this discharge is reflected back into the primary winding 28 and the input impedance 44 in a manner to keep the voltage $V_p$ across the primary winding 28 from decaying to a negative level. Between the times T2 and T3, the FET Q1 is turning off so that its drain-source current $I_1$ is decaying rapidly. However, the Miller capacitance at the interelectrode junction maintains the gate voltage at a positive level during that time period, i.e., between T2 and T3. Since the gate voltage on FET Q1 is held positive, the

voltage $V_p$ across the primary winding 28 also stays positive such that FET Q1 is not biased in a forward direction. At time T3, the FET Q1 interelectrode capacitance has been discharged and the voltage $V_{g1}$ at the gate electrode rapidly decays. Also beginning at time T3, the Miller or gate electrode capacitance of FET Q2 begins to charge until the FET Q2 is finally gated into conduction at time T4. The voltage $V_{g2}$ at the gate of FET Q2 is held down until the Miller capacitance is fully charged and current $I_2$ from drain to source in FET Q2 has reached its maximum level. At this point, starting at time T5, the gate voltage $V_2$ on FET Q2 charges up to approximately the value of $V_s$ or that value coupled through the transformer 22. Thus, as can be seen, between the times T3 and T4 both FET Q1 and FET Q2 are maintained in a non-conducting state and this time is independent of operating frequency and is only dependent on the characteristics of the devices used in the circuit.

As will be appreciated, for proper operation the value of the resistor 44 must be selected to be large enough, when compared to the value of the resistors 32 and 40, to assure that when the voltage at the gate electrode of FET Q1 is positive and equal to the turn on threshold voltage of gate Q1, that the gate voltage at FET Q2 is kept below its threshold level. By imperical testing, it has been found that a value of resistor 44 which is approximately ten times the value of either the resistor 32 or the resistor 40 is sufficent to prevent cross-over current. It will be noted that resistors 32 and 40 are selected to have equal values. By cross-over current is meant that current is occurring in both FET Q1 and FET Q2 at the same time. When constructed for operation, a value of 120 ohms for resistor 44 and a value of 15 ohms for resistors 32 and 40 were found to produce satisfactory results. Additional evaluation also showed that a value of 47 ohms for resistor 44 coupled with a value of 4.7 ohms for resistors 32 and 40 also produced a circuit which did not have cross-over current. However, in a circuit in which the value of resistor 44 was reduced to 0 ohms while maintaining the value of resistors 32 and 40 at 15 ohms, significant cross-over current was observed. It will be understood that the impedance reflected into the primary winding of the input pulse transformer 22 includes not only the value of the resistors 32 and 40, but also the impedance inherent in the transformer itself. Accordingly, the transformer 22 is preferably a switching transformer or pulse transformer and may be preferably constructed of a tightly coupled transformer such as the type that is bifilar wound on a magnetic core.

Referring now to Figure 3 the is shown an alternate embodiment of the present invention as applied to a half-bridge inverter circuit connected for driving the load $R_L$ directly. In this embodiment, the drain terminal D of FET Q1 is connected to a positive terminal of a voltage source $V_1$ and its source terminal S is connected to a terminal 54 to which one terminal of the load $R_L$ is connected. The gate terminal G of FET Q1 is connected through the resistor 32 to the end 30 of winding 24. The second end 34 of winding 24 is connected to the source terminal of FET Q1.

The FET Q2 has its drain terminal D connected to the source terminal S of FET Q1 and its source terminal S connected to a negative terminal of a voltage source $V_2$. The gate terminal G is connectd through the resistor 40 to the terminal 38 of winding 26 while the source terminal S is connected to the terminal 36 of winding 26.

-9-

The FET's Q1 and Q2 in the embodiment of Figure 3 are operated in the same manner as was described with reference to Figure 1. Accordingly, the wave forms of Figure 2 are applicable to Figure 3. The resistor 44 in conjunction with the impedance of the primary side of transformer 22 acts to limit the discharge of the interelectrode capacitance thus preventing shoot-through.

It should be noted that the impedance of the primary circuit of transformer 22, schematically represented as the resistor 44, is the controlling impedance for preventing the shoot-through problem. Although the resistor 44 may in fact be a fixed resistor, the proper impedance may be attained by appropriately winding and design of the transformer 22. Accordingly, the reference to the resistor 44 should be considered only as representative of a primary or input circuit impedance. Furthermore, while shown in only a half-bridge configuration, the invention is equally applicable to a full bridge FET inverter.

Although a preferred embodiment of the present invention has been described in detail, those skilled in the art will appreciate that certain modifications and variations of this embodiment may be made without materially departing from the novel features of the invention. Accordingly, all such variations and modifications are intended to be included within the scope of the appended claims.

-10-

~~WHAT IS CLAIMED IS:~~ — CLAIMS —

1. In an inverter including at least first and second FET's, each FET having a gate electrode, a source electrode and a drain electrodemeans for driving the respective FET's from a single pulse source comprising:

a pulse transformer having a primary winding and a first and a second secondary winding;

first and second input terminals for receiving a switching command signal from the pulse source, the command signal having a first high state for gating the first FET into conduction and a second low state for gating the second FET into conduction ;

means connecting said primary winding of said pulse transformer between said first and said second input terminals to form a primary input circuit having a predetermined input impedance;

first means coupling a first end of said first secondary winding to the gate electrode of the first FET;

second means coupling a first end of said second secondary winding to the gate electrode of the second FET; and

third means coupling a second end of each of said first and second secondary windings to the common source terminal of each FET.

2. The invention of claim 1 wherein said first and second coupling means each comprises a non-inductive resistance.

3. The invention of claim 2 wherein said input impedance has a value higher than the resistance of said first coupling means.

0206104

-11-

4.    The invention of claim 3 wherein said connecting means includes a resistor.

5.    The invention of claim 1 wherein said first and second FET's are connected in a push-pull relation such that the source electrode of each FET is connected in a common to a relatively negative voltage terminal of a DC power supply, the drain electrode of each FET being connected to a corresponding end terminal of a center-tap primary winding of an output transformer, the center-tapped of the primary winding being connected to a relatively positive voltage terminal of the DC power supply.

6.    The invention of claim 1 wherein said first and second FET's are connected in a half-bridge relation such that the source electrode of said first FET and the drain electrode of said second FET are connected in common to one terminal of an electrical load, the drain electrode of said first FET is connected to a relatively positive voltage terminal of a center-tapped DC power supply, the source electrode of said second FET is connected to a relatively negative voltage terminal of said DC power supply, and a second terminal of said load is connected to a terminal at the center-tap of said power supply.

7.    An inverter circuit for inverting signals across an output load responsive to a switching command signal, said circuit comprising:

a)    a transistor network including first and second field effect transistors each having source, drain and gate electrodes, with said field effect transistors coupled together in an inverter relation with each other and with a common connection therebetween;

b) means for coupling said switching command signal to each of said gate electrodes; and

c) means including an impedance of a predetermined value for keeping the voltage at said gate electrode for one of said field effect transistors below its threshold voltage level when the voltage at said gate electrode for the other field effect transistor is positive and equal to or above its turn-on threshold voltage level.

8. The inverter circuit of claim 7 wherein said coupling means comprises a pulse transformer having a primary signal receiving winding and first and second secondary windings, said secondary windings each having a first terminal coupled to a gate electrode of a corresponding one of said FET's.

9. The inverter circuit of claim 8 wherein a predetermined impedance couples each of said first terminals of said secondary windings to said corresponding FET.

10. The inverter circuit of claim 9 wherein said primary winding includes a series connected resistor having a predetermined value.

11. The inverter circuit of claim 10 wherein the input impedance of said primary winding including said resistor has a value higher than the impedance of each of said secondary windings and coupling impedance.

12. The inverter circuit of claim 11 wherein said predetermined impedance comprises a non-inductive resistor.

-13-

13.  The inverter circuit of claim 12 wherein said resistor in said primary winding circuit has a value approximately 10 times the value of said resistor in each of said secondary winding circuits.

14.  The inverter circuit of claim 13 wherein said field effect transistors are coupled together in a push-pull relation.

15.  The inverter circuit of claim 13 wherein said field effects transistors are coupled together in a half-bridge relation.

16.  The inverter circuit of claim 14 wherein said source electrodes of each of said FET's are coupled together at said common connection, the inverter circuit including:

a)   a DC power source having respective positive and negative terminals; and

b)   an output transformer having primary and secondary windings, said common connection being coupled to said negative terminal, said positive terminal being connected to a center terminal of said primary winding of said output transformer, and the drain electrodes of each of said FET's being coupled to corresponding end terminals of said primary winding of said output transformer.

17.  The inverter circuit of claim 15 wherein said source electrode of a first of said FET's is connected to said drain electrode of a second of said FET's to form said common connection, said drain electrode of said first FET being connected to a relatively positive voltage terminal of a DC power supply, said source electrode of said second FET being connected to a

0206104

-14-

relatively negative voltage terminal of said DC power supply, and a load being connected between said common connection and a neutral voltage terminal of said power supply.

18. An inverter circuit for inverting signals across an output load responsive to a switching command signal, said circuit comprising:

a) an output transformer having primary and secondary windings;

b) a source of direct current power;

c) a transistor network coupled across said primary winding of said output transformer, said transistor network including first and second field effect transistors each having source, drain and gate electrodes and with said field effect transistors coupled together in an inverter relation having at least one common connection;

d) an input transformer having a primary winding and first and second secondary windings, each of said secondary windings having one terminal coupled to said source electrode of a corresponding one of said FET's and with other terminal of each secondary winding coupled to said gate electrode of said corresponding one of said field effect transistors; and

e) means including an impedance of a preselected value for keeping the voltage at said gate electrode for one of said field effect transistors below its threshold voltage level when the voltage at said gate electrode for the other field effect transistor is positive and equal to or above its turn-on threshold voltage level.

19. The inverter circuit of claim 14 wherein said impedance comprises a resistor connected in series

-15-

circuit with said primary winding of said input transformer.

20. The inverter circuit of claim 15 wherein said inverter is connected in a push-pull arrangement, said source electrodes of each of said FET's being connected to said common connection at a relatively negative voltage terminal of said power source, and said drain electrodes being connected to corresponding end terminals of said primary of said primary winding of said output transformer.

FIG-1

FIG-3

FIG-2

0206104